# EUROPEAN PATENT SPECIFICATION

(11) **EP 4 353 439 B1**
(45) Date of publication and mention of the grant of the patent: **20.08.2025**
(21) Application number: 23200757.5
(22) Date of filing: 29.09.2023
(51) Int. Cl.: B29C 48/80, B29C 45/74, H05B 3/00

(54) **ELECTRIC HEATER FOR INDUSTRIAL PROCESSING MACHINES**
ELEKTRISCHE HEIZVORRICHTUNG FÜR INDUSTRIELLE VERARBEITUNGSMASCHINEN
DISPOSITIF DE CHAUFFAGE ÉLECTRIQUE POUR MACHINES DE TRAITEMENT INDUSTRIEL

(30) Priority: 05.10.2022 IT 202200020433
(43) Date of publication of application: 17.04.2024
(73) Proprietor: Petrelli, Patrizio, 21100 Varese (IT)
(72) Inventor: Petrelli, Patrizio, 21100 Varese (IT)
(74) Representative: Modiano, Micaela Nadia

(56) References cited:
- EP-A2- 0 122 886
- WO-A1-2010/055206
- CH-A- 502 181
- DE-U1- 29 920 207
- IT-A1- MI 992 364
- US-A- 3 743 252
- US-A- 4 758 146

## Description

The present invention relates to an electric heater for industrial processing machines. More specifically, the invention relates to an electric heater for switching on plasticization of extruders and injection molding presses, plates for thermoforming machines and innumerable applications, which are based on the principle of heating via irradiation with electromagnetic waves.

As is known, in many industrial fields, in particular in the field of machines for processing plastic materials, it is necessary to use electric heaters which are installed at portions of the machine, respectively in order to bring the temperature value to a preset level, as a function of the type of processing that is to be performed.

Conventional heaters comprise an upper half-shell and a lower half-shell which are adapted to constitute a heating body within which a plurality of heating elements can be accommodated. The two half-shells, upper and lower, are accommodated in a containment housing and there is also an outer enclosure adapted to contain the containment housing, which in turn accommodates the half-shells. The outer enclosure and the containment housing for the half-shells are used as a chamber for the passage of external air, in order to dispose of the heat produced by the half-shells.

The heating elements accommodated inside the half-shells are arranged along the axis of the cylinder defined by the two half-shells mentioned above.

Each heating element is preferably made of a helical element which is contained in a quartz tube, which, when the resistances are heated, becomes incandescent and emits radiation in the infrared field.

Conventional types of heaters therefore have a group of half-shells which defines an accommodation container which is of the double-chamber type, i.e. an inner chamber insulated with ceramic fiber, and another, outer chamber for the passage of cooling air on the outer shell.

Furthermore, in conventional types of heaters the thermal adjustment is done by air cooling, with the air entering the lower part and exiting from the upper part. This flow of air from the lower part to the upper part of the two half-shells coupled together controls the temperature correctly, but it aggravates the problem of thermal conductivity, which makes the temperature difference evident between the upper and lower parts of the cylinder which is accommodated inside the pair of half- shells.

Conventional heating arrangements of the prior art are for example disclosed in IT MI 992 364 A1, DE 299 20 207 U1, US 4758 146 A, EP 0 122 886 A2, US 3 743 252 A, CH 502 181 A and WO 2010/055206 A1.

This temperature difference, which currently cannot be managed or controlled (because the control occurs via a probe located at a point on the circumference of the cylinder), causes a deformation of the cylinder itself, with an increased lengthening of the cylinder owing to thermal dilation on the upper part (the cylinder tends to rise and to deform upward).

Given that the cylinder that is accommodated inside the two half-shells normally accommodates a rotating screw conveyor inside it which conveys the molten plastic, and this rotating screw has an average tolerance of between 5 and 15 hundredths of a millimeter, the deformation of the cylinder can greatly exceed this tolerance, thus creating a chafing/rubbing of this screw during processing, therefore leading to the premature wear of the screw.

The aim of the present invention is to provide an electric heater for industrial processing machines, in which the cooling is done using a forced air recirculation system, thus reducing the temperature gap between the upper part and the lower part of the cylinder which can be accommodated in the heater, thus completely or almost completely preventing the deformation of the cylinder.

Within this aim, an object of the present invention is to provide an electric heater for industrial processing machines that is still based on infrared electromagnetic waves.

Another object of the present invention is to provide an electric heater for industrial processing machines, in which the heating of the outer half-shell of the heater is avoided as far as possible.

Another object of the present invention is to provide an electric heater for industrial processing machines that is highly reliable, easily and practically implemented and of low cost.

This aim and these and other objects which will become better apparent hereinafter are achieved by an electric heater for industrial processing machines, which comprises an upper half-shell and a lower half-shell which are hinged to each other and are adapted to define a receiving chamber, heating means being accommodated within said receiving chamber, characterized in that it comprises fan means arranged at the bottom of said lower half-shell and adapted to generate a forced air recirculation system which allows said forced air to enter said chamber from above and then to exit downward.

Further characteristics and advantages of the invention will become better apparent from the description of a preferred, but not exclusive, embodiment of the heater according to the present invention, which is illustrated by way of non-limiting example in the accompanying drawings wherein:

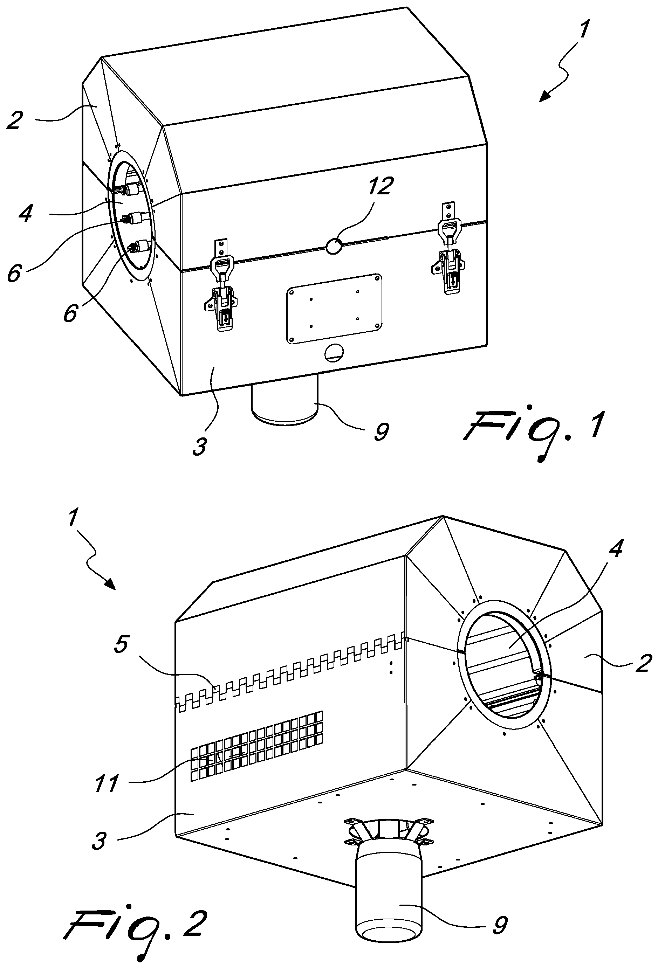

Figure 1 is a perspective view of the heater according to the present invention;
Figure 2 is another perspective view of the heater according to the present invention;

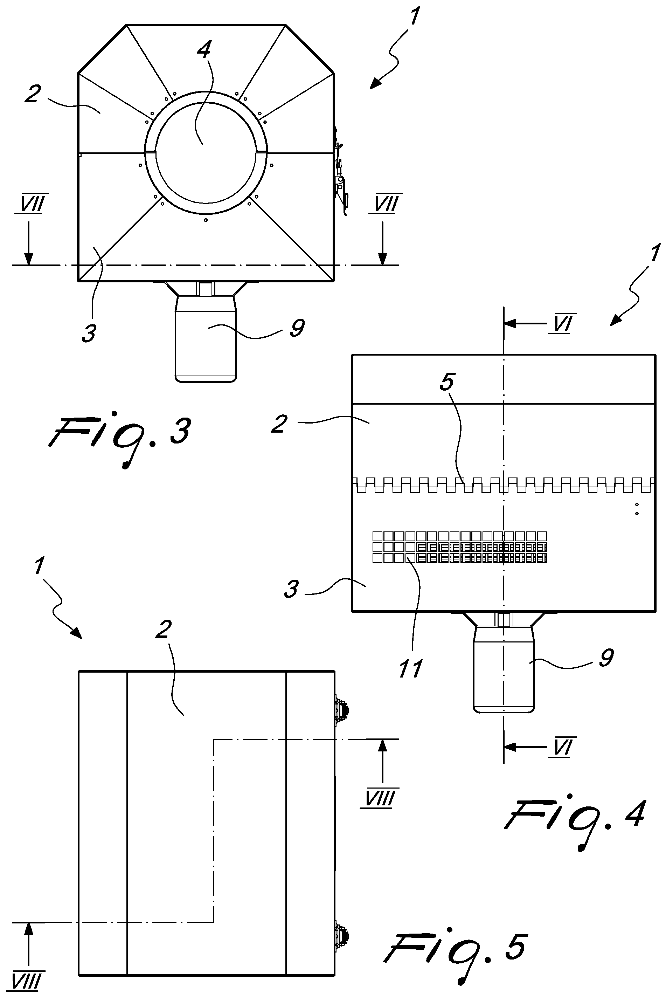

Figure 3 is a front elevation view of the heating device according to the present invention;
Figure 4 is a side view of the heating device according to the present invention;
Figure 5 is a plan view from above of the heating device according to the present invention;

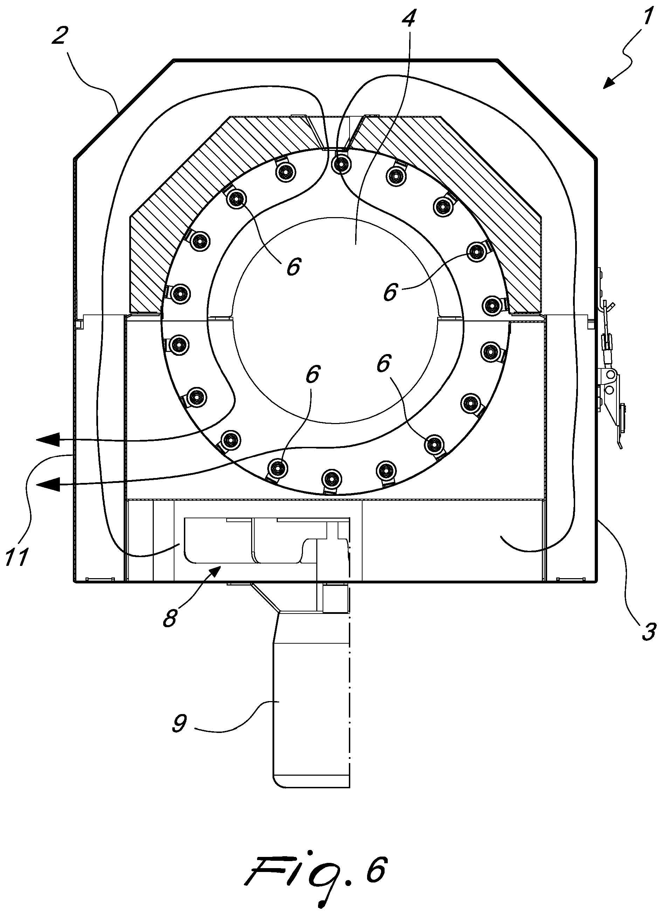

Figure 6 is a transverse cross-sectional view taken along the line VI-VI of the heater according to the present invention;

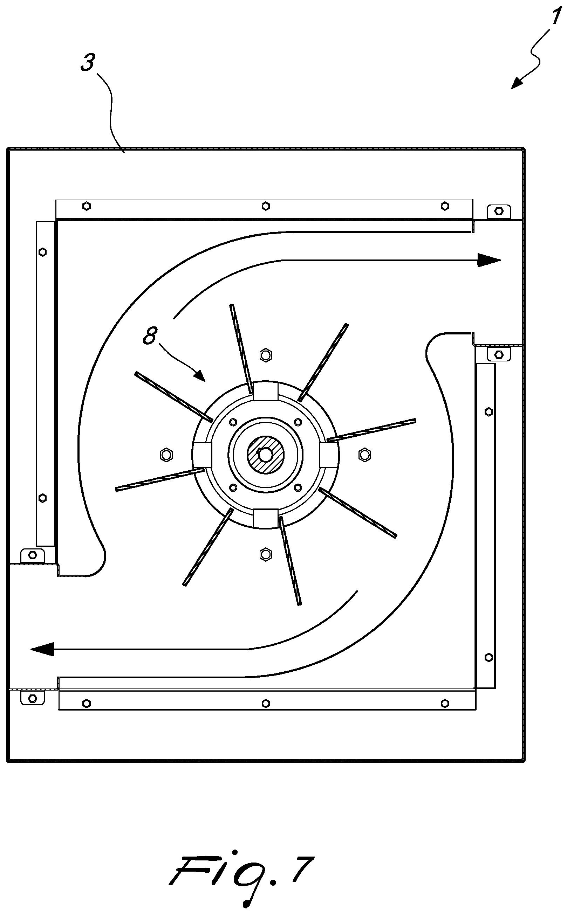

Figure 7 is a transverse cross-sectional view taken along the line VII-VII of the heater according to the present invention;

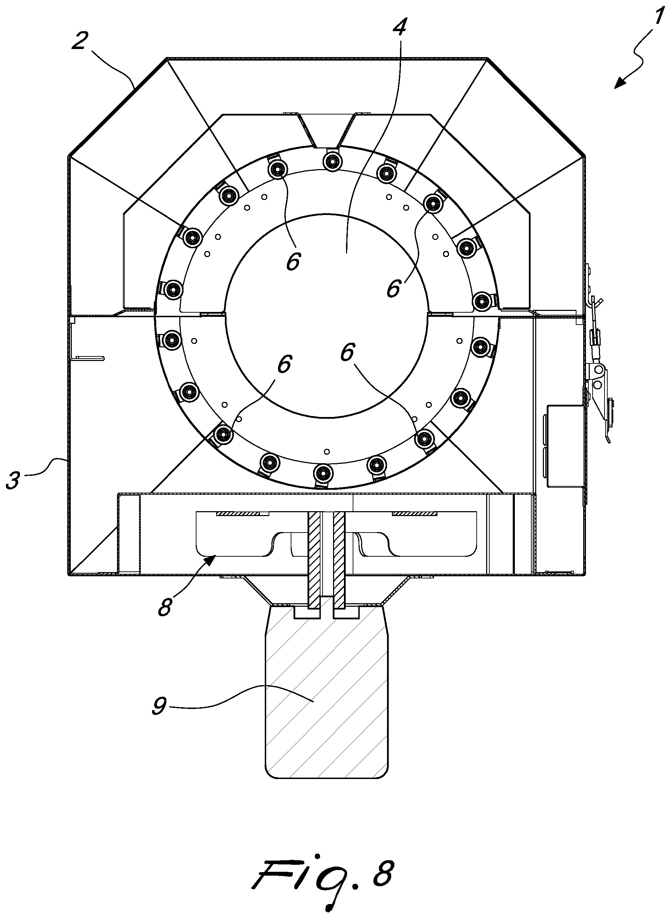

Figure 8 is a transverse cross-sectional view taken along the line VIII-VIII of the heater according to the present invention.

With reference to the figures, the heater according to the present invention, generally designated by the reference numeral 1, comprises an upper half-shell 2 and a lower half-shell 3 which are adapted to be mutually pivoted and to define an internal receiving chamber 4.

The pivoting occurs via hinges 5 arranged at one side of the half-shells 2 and 3 which are mutually coupled.

The internal chamber 4 makes it possible to accommodate, for example, a plasticizer cylinder or the like.

The chamber 4 is made with a single thermally insulated ceramic fiber chamber which accommodates heating means such as infrared lamps 6 which make it possible to provide the heating.

Fan means 8 are also accommodated in the two half-shells 2 and 3, and are conveniently actuated by an electric motor which is arranged outside the two half-shells 2 and 3.

Advantageously, the fan means 8 comprise a double-intake centrifugal fan that is mounted on a vertical axis with a horizontal impeller.

The fan means 8 are arranged at the lower part of the two half-shells 2 and 3, therefore at the lower half-shell 3, thus arranged with its axis perpendicular to the axis of the thermally-insulated chamber 4, and allow a forced air recirculation system to make cold air enter from above in order to then exit from below.

The fan means 8 with the above-mentioned forced air recirculation make it possible to reduce the temperature delta in the area between the upper and lower parts of the cylinder (not shown) that is accommodated in the chamber 4, thus preventing, completely or almost completely, the deformation thereof.

The fan means 8 therefore make air 9 enter at the bottom region of the lower shell 3, in order to then bring the air upward, make it enter the thermally insulated chamber 4, and then expel it laterally at the grille 11.

This forced flow of air is done bilaterally, with the air always passing from above and then going downward.

The lower half-shell 3 has an air exit grille 11, which directs the air originating from the forced circulation described above outside.

Between the upper half-shell 2 and the lower half-shell 3, a passage hole 12 for a temperature probe is provided.

The forced circulation of air using the fan means 8 occurs between the thermally insulated ceramic fiber chamber 4 and a space defined between the chamber 4 and the half-shells 2 and 3 in which such thermally insulated ceramic fiber chamber 4 is accommodated.

The entry of the air occurs, as mentioned, from above into the thermally insulated chamber 4, and the air then exits from the latter from below and is then expelled outside the two half-shells 2 and 3, passing through the grille 11.

The fan means 8 are therefore arranged at the bottom of the lower half-shell 3.

In practice it has been found that the heater according to the present invention fully achieves the set aim and objects, in that it makes it possible to distribute the same temperature in the area between the upper surface and the lower surface of a cylinder accommodated in the chamber of the electric heater according to the invention.

This is due to the creation of a forced air recirculation system which enables cold air to enter from above and then exit from below.

The heater, thus conceived, is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric heater (1) for industrial processing machines, which comprises an upper half-shell (2) and a lower half-shell (3) which are hinged to each other and are adapted to define a receiving chamber (4), heating means (6) being accommodated within said receiving chamber (4), **characterized in that** it comprises fan means (8) arranged at the bottom of said lower half-shell (3) and adapted to generate a forced air recirculation system which allows said forced air to enter said chamber (4) from above and then to exit downward.

2. The electric heater according to claim 1, **characterized in that** said fan means (8) are activated by an electric motor located outside said lower half-shell (3).

3. The electric heater according to claim 1 or 2, **characterized in that** said chamber (4) is a thermally insulated ceramic fiber chamber which accommodates said heating means (6) inside it.

4. The electric heater according to one or more of the preceding claims, **characterized in that** it comprises, at said lower half-shell (3), a grille (11) for expelling said air in forced circulation.

5. The electric heater according to one or more of the preceding claims, **characterized in that** said forced air enters said chamber (4) at the heating means (6) of said chamber and is then circulated around said heating means(6) and sent outside through said grille (11).

6. The electric heater according to one or more of the preceding claims, **characterized in that** it comprises, at connecting hinges (5) between said lower half-shell (3) and said upper half-shell (2), a hole (12) for the passage of a temperature probe.

## Patentansprüche

1. Eine elektrische Heizvorrichtung (1) für industrielle Verarbeitungsmaschinen, die eine obere Halbschale (2) und eine untere Halbschale (3) umfasst, welche gelenkig miteinander verbunden und ausgebildet sind, um eine Aufnahmekammer (4) zu bestimmen, wobei Heizmittel (6) in der Aufnahmekammer (4) untergebracht sind; **dadurch gekennzeichnet, dass** sie Ventilatormittel (8) umfasst, die am Boden der unteren Halbschale (3) angeordnet und ausgebildet sind, um ein Zwangs-Umluftsystem zu erzeugen, das es der Umluft ermöglicht, von oben in die Kammer (4) einzutreten und unten auszutreten.

2. Die elektrische Heizvorrichtung gemäß Anspruch 1, **dadurch gekennzeichnet, dass** die Ventilatormittel (8) durch einen Elektromotor angetrieben werden, der sich außerhalb der unteren Halbschale (3) befindet.

3. Die elektrische Heizvorrichtung gemäß Anspruch 1 oder 2, **dadurch gekennzeichnet, dass** die Kammer (4) eine wärmeisolierte Keramikfaserkammer ist, die die Heizmittel (6) in ihrem Inneren aufnimmt.

4. Die elektrische Heizvorrichtung gemäß einem oder mehreren der obigen Ansprüche, **dadurch gekennzeichnet, dass** sie an der unteren Halbschale (3) ein Gitter (11) zum Ausstoßen der Luft im Zwangsumlauf umfasst.

5. Die elektrische Heizvorrichtung gemäß einem oder mehreren der obigen Ansprüche, **dadurch gekennzeichnet, dass** die Umluft in die Kammer (4) an den Heizmitteln (6) der Kammer eintritt und dann um die Heizmittel (6) herum zirkuliert und durch das Gitter (11) nach außen befördert wird.

6. Die elektrische Heizvorrichtung gemäß einem oder mehreren der obigen Ansprüche, **dadurch gekennzeichnet, dass** sie an den Verbindungsscharnieren (5) zwischen der unteren Halbschale (3) und der oberen Halbschale (2) ein Loch (12) zum Hindurchführen einer Temperatursonde umfasst.

## Revendications

1. Un dispositif de chauffage électrique (1) pour machines de traitement industriel, qui comprend une demi-coque supérieure (2) et une demi-coque inférieure (3) qui sont articulées l'une à l'autre et sont adaptées pour définir une chambre de réception (4), des moyens de chauffage (6) étant logés à l'intérieur de ladite chambre de réception (4), **caractérisé en ce qu'**il comprend des moyens de ventilation (8) disposés au fond de ladite demi-coque inférieure (3) et adaptés pour générer un système de recirculation d'air forcé qui permet audit air forcé d'entrer dans ladite chambre (4) par le haut, puis de sortir vers le bas.

2. Le dispositif de chauffage électrique selon la revendication 1, **caractérisé en ce que** lesdits moyens de ventilation (8) sont actionnés par un moteur électrique situé à l'extérieur de ladite demi-coque inférieure (3).

3. Le dispositif de chauffage électrique selon la revendication 1 ou 2, **caractérisé en ce que** ladite chambre (4) est une chambre en fibre céramique isolée thermiquement qui loge ledit moyen de chauffage (6) à l'intérieur.

4. Le dispositif de chauffage électrique selon une ou plusieurs des revendications précédentes, **caractérisé en ce qu'**il comprend, au niveau de ladite demi-coque inférieure (3), une grille (11) pour expulser ledit air en circulation forcée.

5. Le dispositif de chauffage électrique selon l'une ou plusieurs des revendications précédentes, **caractérisé en ce que** ledit air forcé pénètre dans ladite chambre (4) au niveau des moyens de chauffage (6) de ladite chambre, puis circule autour desdits moyens de chauffage (6) et est envoyé à l'extérieur à travers ladite grille (11).

6. Le dispositif de chauffage électrique selon l'une ou plusieurs des revendications précédentes, **caractérisé en ce qu'**il comprend, au niveau des charnières de liaison (5) entre ladite demi-coque inférieure (3) et ladite demi-coque supérieure (2), un trou (12) pour le passage d'une sonde de température.
